(19) **Europäisches Patentamt / European Patent Office / Office européen des brevets**

(11) **EP 4 358 726 B1**

(12) **EUROPEAN PATENT SPECIFICATION**

(45) Date of publication and mention
of the grant of the patent:
**19.11.2025 Bulletin 2025/47**

(21) Application number: **22733469.5**

(22) Date of filing: **21.06.2022**

(51) International Patent Classification (IPC):
**A23D 7/005** (2006.01)   **A23D 7/01** (2006.01)
**A23L 9/20** (2016.01)   **A23P 30/40** (2016.01)
**A23C 13/12** (2006.01)

(52) Cooperative Patent Classification (CPC):
**A23L 9/20; A23C 13/12; A23D 7/0053;**
**A23D 7/011; A23D 9/007; A23D 9/013; A23D 9/05;**
**A23L 9/22; A23L 9/24; A23P 30/40;** A23C 2210/30

(86) International application number:
**PCT/EP2022/066796**

(87) International publication number:
**WO 2022/268758 (29.12.2022 Gazette 2022/52)**

(54) **POWDERED WHIPPING AGENT PROVIDING ENHANCED WHIPPED FOOD TEXTURE**

PULVERFÖRMIGES AUFSCHLAGMITTEL ZUR VERBESSERUNG DER TEXTUR VON
AUFGESCHLAGENEN LEBENSMITTELN

AGENT MOUSSANT EN POUDRE PERMETTANT D'AMÉLIORER LA TEXTURE DES ALIMENTS
FOUETTÉS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.06.2021 EP 21181225**

(43) Date of publication of application:
**01.05.2024 Bulletin 2024/18**

(73) Proprietor: **FrieslandCampina Nederland B.V.**
**3818 LE Amersfoort (NL)**

(72) Inventors:
• **MEIJER, Margarethe Jennie**
**6708 WH Wageningen (NL)**

• **SAUER, Gunter Alfred**
**6708 WH Wageningen (NL)**
• **DE JONG, Elisabeth Wilhelmina Maria**
**6708 WH Wageningen (NL)**
• **BRIEGER, Thorsten Andreas**
**6708 WH Wageningen (NL)**

(74) Representative: **FrieslandCampina IP Department**
**Bronland 20**
**6708 WH Wageningen (NL)**

(56) References cited:
EP-A1- 3 639 672   WO-A1-00/11973
WO-A1-2012/050439   GB-A- 1 091 270
GB-A- 1 475 425   US-A- 3 330 667
US-A- 3 656 972   US-A- 3 924 018
US-A1- 2004 076 731

## Description

### FIELD OF THE INVENTION

The present invention relates to an powdered instant whipping agent providing an enhanced whipped food texture, and to a method of preparing such an instant whipping agent. The invention further relates to the use of such an instant whipping agent for preparing a whipped food product.

### BACKGROUND TO THE INVENTION

Whipping agents are widely used in the food industry and at home. Whipping agents serve to incorporate gas such as air into food products by whipping them with an edible liquid, for instance milk or water. The obtained whipped products can then be used as, for instance, instant desserts, cake fillings and decorations, ice cream fillings and the like.

Whipping agents are typically spray-dried emulsions, comprising fat, one or more emulsifiers, carbohydrates and protein. A typical composition of such a whipping agent contains about 30 - 40 wt.% (vegetable) fat, 9 - 18 wt. % emulsifier, 30 - 50 % carbohydrates, and about 3 - 8 wt.% protein.

An important function of whipping agents is the ability to be easy to whip, and produce a high enough overrun and firmness to keep the whipped product stable (i.e. shape retention) for a longer period of time. This can for instance be hours and even up to days.

Further, whipped or aerated food products made with conventional whipping agents should have an acceptable sensory profile.

The typical sensory profile of conventional whipping agents can be described as giving a sticky and long lingering mouthfeel and lacks a dairy experience in both taste and mouthfeel. This is unlike whipped cream, which is characterized by a sensory profile with a creamy taste and mouthfeel and is dissolving more quickly in the mouth

EP3639672 discloses a powdered whipping agent which is free from palm-based bulk edible oil and fat and free from palm-based emulsifiers.

The need therefore exists to provide an improved powdered whipping agent providing to the whipped product sensory properties that are more in line with whipped dairy cream than the conventional whipping agents, and which also has a good overrun, good firmness, and good stability over time.

### SUMMARY OF THE INVENTION

It has now been found that by adapting the composition of conventional powdered whipping agents with respect to the amounts of fat and emulsifier, an enhanced sensory effect could be obtained compared to traditional whipping agents. Specifically, it has been found that by raising the amount of fat, and at the same time lowering the emulsifier content as compared to conventional powdered whipping agents, a surprisingly good texture and mouthfeel, which are all important sensory aspects, could be obtained and at the same time, good whipping properties, such as good overrun and foam stability, were achieved as well.

Accordingly, in a first aspect, the invention relates to a powdered whipping agent suitable for preparing a whipped topping, the whipping agent comprising, by weight of the whipping agent:

    a. 57 - 70 wt. % fat or oil;
    b. 1 - 6.5 wt.% of an alpha-tending emulsifier, selected from the group consisting of lactic acid esters of mono and/or diglycerides of fatty acids, acetic acid esters of mono and/or diglycerides of fatty acids, propyleneglycol monostearate, and mixtures thereof;
    c. 0.2 - 2.0 wt. % of nonionic mono- and/or diglycerides of fatty acids having an acyl chain of 14 - 20 carbon atoms;
    d. 1.0 - 5 wt. % proteinaceous emulsifier
    e. 18 - 35 wt. % carbohydrates
    f. 0.1 - 4 wt. % moisture;
    and wherein the weight/weight ratio of the fat or oil to the alpha-tending emulsifier is 10 or higher and lower than 30

In a second aspect, the invention relates to a method for preparing a powdered whipping agents according to the invention, comprising the steps of:

    a. Preparing a mixture of water and the fat or oil, the alpha-tending emulsifier, the nonionic mono and/or diglyceride of fatty acids having an acyl chain of 14 - 20 carbon atoms; the proteinaceous emulsifier, the carbohydrates, and optionally other components; and wherein the weight/weight ratio of the fat or oil to the alpha-tending emulsifier is 10 or higher and lower than 30;

b. Homogenizing the mixture to obtain an emulsion;

c. Spray drying the emulsion to obtain a powder.

In a third aspect, the invention relates to a method for preparing a whipped food product having an overrun of 100-300 % comprising whipping the composition of the invention in a food acceptable liquid.

In a fourth aspect, the invention further relates to the use of the powdered whipping agent according to the invention for the preparation of a whipped food product, in particular a dessert, cake or pie filling or decoration, ice cream filling, crème Chantilly, or mousse.

## DETAILED DESCRIPTION

Definitions.

The term "powdered whipping agent" us used herein has its conventional meaning and refers to a dry composition which is preferably spray-dried, and may be added to a edible liquid such as water or milk, after which it may be whipped to form a stable and firm foam.

The term "fat or oil" us used herein has its conventional meaning and refers to triglycerides, being fatty acid esters of glycerol, the fatty acids may be saturated or unsaturated.

The term "alpha-tending emulsifier" has its conventional meaning and refers to organic acid esters of mono- and/or diglycerides wherein most of said esters are present, or are able, to crystallize in their alpha crystalline form (see e.g. Gerard L. Hasenhuettl, Food emulsifiers and their applications, 2008 p. 305.

The term "nonionic mono- and/or diclycerides" has its conventional meaning and refers to mono- and/or di-esters of fatty acids and glycerol, which contain substantially no ionic or ionizable residues.

The term "Overrun" is defined by means of the following formula:

$$d \ / (b-a) \times 100 - 100 = \% \text{ overrun.}$$

wherein:

a = weight of empty cup

b = weight of cup filled with whipped product

d = cup volume.

Conventional powdered whipping agents normally have fat or oil content of around 30 - 40 wt.% (see f.i. Hasenhuttl 208, page 230), and an alpha-tending emulsifier content of around 9 - 18 wt.%, which makes them suitable for providing a whipped topping that shows good overrun and foam stability. However, as stated before, the sensory aspect can be qualified as a sticky, long lingering mouthfeel and lack of dairy experience in both taste and mouthfeel, giving a sensation far away from dairy cream and therefor the "creamy" sensation is absent.

EP 3 639 672 relates to a whipping agent which is free from palm-based bulk edible oil and fat and free from palm-based emulsifiers. It comprises on a dry weight bases 25-75 % of a non-palm based edible oil or fat; 5 - 30 % of a non-palm based alpha-tending emulsifier; 1 - 15 % of a proteinaceous emulsifier, and 25 - 60 % carbohydrates. It was observed that the products according to EP 3 639 672 have a sticky, long lingering mouthfeel, and its working examples teach the skilled person towards a low fat or oil to alpha-tending emulsifier weight ratio of about 2.

By using the composition according to the invention, major progress has now been made in improving the sensory attributes of whipped toppings.

In the art, it has never been contemplated or suggested to deviate from this relatively low fat or oil content and relatively high alpha-tending emulsifier content (which may be characterized by the fat or oil to alpha-tending emulsifier wt./wt. ratio) in powdered whipping agents. Rather, a solution to solve the sensory aspect was sought by using for instance different fat or oils, or fractions thereof, or adding flavor ingredients.

It now appeared that deviating from this traditional view to apply low fat and high alpha-tending emulsifier amounts, resulted unexpectedly in enhanced sensory aspects whilst still excellent whipping properties (overrun and foam stability) were achieved.

As stated hereinbefore, the whipping agent has a higher fat or oil content compared to conventional powdered whipping agents.

The whipping agent according to the invention comprises 57 - 70 wt.

The whipping agent preferably comprises 60 - 69 wt. %, more preferably 61 - 68 wt. % most preferably 62 - 67 wt. % fat or oil.

The fat or oil in the whipping agent may comprise one or more vegetable oils. Preferably, the fat or oil is selected from the group consisting of palm oil, palm kernel oil, coconut oil, palm kernel stearin, sunflower oil, rapeseed oil, soybean oil, corn oil, shea oil, and/or mixtures thereof.

The fat or oil may be natural, non-hardened, or fully hardened, or mixtures thereof. Hardened fat or oil is defined as fat or oil in which substantially all the double carbon-carbon bonds is the fatty acid residues of the oil or fat have been saturated by hydrogenation.

The skilled person will understand that a combination of fat and oil can also be used.

It is preferred that the oil of fat in the whipping agent comprises more than 80 wt.% of vegetable oil or fat, more preferably more than 90 wt.%, most preferably more than 95 wt. %, based on the weight of the fat or oil present. In a most preferred embodiment, all the fat or oil is vegetable fat.

The fat or oil may optionally comprise some milk fat and/or butter oil. However, it was found that a too high amount of milk fat or butter oil resulted in a too soft and less firm whipped foam. Accordingly, preferably, the fat or oil comprises less than 20 wt. % of milk fat and/or butter oil, preferably less than 15 wt.%, most preferably less than 10 wt. %, based on the weight of the fat or oil present in the whipping agent. For the sake of clarity, the amount of milk fat and butter oil together in the fat or oil present in the whipping agent, is at most 20 wt. %, preferably at most 15 wt. %, most preferably at most 10 wt. %, based on the weight of the fat or oil present in the whipping agent. Preferably, the fat or oil comprises more than 1%, more preferably more than 3 %, most preferably more than 5 % milk fat and/or butter oil, based on the weight of the fat or oil in the whipping agent.

The powdered whipping agent preferably comprises 1.5 - 6.0 wt. % alpha-tending emulsifier selected from the group consisting of lactic acid esters of mono and/or diglycerides of fatty acids, acetic acid esters of mono and/or diglycerides of fatty acids, propyleneglycol monostearate, and mixtures thereof, more preferably 1.7 - 4.7 wt. %, even more preferably 1.9 - 4.5 wt. %, and most preferably between 2.0 and 4.0 wt. % based on the weight of the whipping agent.

Preferably, the alpha-tending emulsifier in the whipping agent is a lactic acid ester of mono and/or diglycerides of fatty acids or an acetic acid ester of mono and/or diglycerides of fatty acids, or mixtures thereof. Most preferably, the alpha tending emulsifier is a lactic acid ester of mono and/or diglycerides of fatty acids.

The fatty acids in the alpha-tending emulsifiers are preferably saturated, more preferably fully saturated.

It appeared that the presence of a second emulsifier next to the alpha-tending emulsifier further improved the whipping ability in overrun, foam stability and mouthfeel of whipped food products using the whipping agent according to the invention.

Accordingly, the whipping agent according to the invention preferably comprises 0.3 - 1.9 wt. %, more preferably 0.4 - 1.7 wt. %, most preferably 0.5 - 1.5 wt. % of nonionic mono- and/or diglycerides of fatty acids having an acyl chain of 14 - 20 carbon atoms, based on the weight of the powdered whipping agent.

Preferably, the nonionic emulsifier is a monoglyceride of fatty acids having an acyl chain of 14 - 20 carbon atoms.

In one embodiment, the nonionic mono- and/or diglycerides of fatty acids having an acyl chain of 14 - 20 carbon atoms comprise an unsaturated acyl chain. Preferably, the unsaturated acyl chain is a C16 or C18 acyl chain, more preferably a C18 chain, even more preferably an oleic acid chain. An oleic acid chain is a C 18: 1 chain. Most preferably, the nonionic mono- and/or diglycerides of fatty acids having an acyl chain of 14 - 20 carbon atoms comprising an unsaturated acyl chain is a glycerol mono-oleate (GMO).

In another embodiment, the nonionic mono- and/or diglycerides of fatty acids having an acyl chain of 14 - 20 carbon atoms comprise a saturated acyl chain. Preferably, the nonionic mono- and/or diglycerides of fatty acids having an acyl chain of 14 - 20 carbon atoms comprising a saturated acyl chain comprise a C18 chain.

More preferably, the nonionic mono- and/or diglycerides of fatty acids having an acyl chain of 14 - 20 carbon atoms comprising a saturated acyl chain comprising a C18 chain is glycerol monostearate (GMS).

It has now been found that the wt./wt. ratio of fat or oil to alpha-tending emulsifier in the whipping agent according to the invention is important. Where traditional whipping agent have for instance around 35 wt. % fat or oil and e.g. 16 wt. % alpha-tending emulsifier, forming a wt./wt. ratio of fat or oil to alpha tending emulsifier of about 2, the whipping agent of the invention has a much higher wt./wt. ratio. Accordingly, the weight/weight ratio oil or fat to alpha-tending emulsifier in the powdered whipping agent is 10 or higher. The weight/weight ratio oil or fat to alpha-tending emulsifier in the powdered whipping is lower than 30, preferably lower than 25.

The weight/weight ratio oil or fat to alpha-tending emulsifier in the powdered whipping lies between 10 and 30, preferably between 13 and 25, most preferably between 15 and 22.

The weight/weight ratio of fat or oil to nonionic mono- and/or diglycerides of fatty acids having an acyl chain of 14 - 20 carbon atoms may preferably be higher than 29, more preferably more than 38, most preferably more than 57.

Preferably, the weight/weight ratio of fat or oil to nonionic mono- and/or diglycerides of fatty acids having an acyl chain of 14 - 20 carbon atoms is lower than 240, more preferably lower than 140, most preferably lower than 100.

In an embodiment, in the powdered whipping agent, the weight/weight ratio of alpha-tending emulsifier, selected from the group consisting of lactic acid esters of mono and/or diglycerides of fatty acids, acetic acid esters of mono and/or diglycerides of fatty acids and propyleneglycol monostearate to nonionic mono- and/or diglycerides of fatty acids having an acyl chain of 14 - 20 carbon atoms, is preferably between 1.5 and 10, more preferably between 1.7 and 6.0, most preferably between 2 and 4.

The powdered whipping agent preferably comprises 0.1 - 1.5, more preferably 0.2 - 1.2, most preferably 0.4 - 1.1 wt.% of additional components selected from the group of stabilizers, hydrocolloids, flavoring agents and coloring agents, and combinations thereof.

Suitable stabilizers may be selected from group of phosphates, diphosphates, polyphosphates, hexametaphosphates, their sodium or potassium salts, and mixtures thereof. Preferably, stabilizers may be present in an amount of 0.7 - 1.5 wt. %. based on the weight of the whipping agent. Preferred is dipotassium phosphate.

Hydrocolloids may be selected by the skilled person as required, and can suitably comprise e.g. locust bean gum, gelatin, gellan gum, xanthan gum, guar gum, gum Arabic, starch, modified starch, gum karaya, gum tragacanth, cellulose gum, carrageenan, agar, alginate, pectin, carboxymethylcellulose, hydroxymethylcellulose, and mixtures thereof. For the purpose of the invention, gelatin is not comprised in the definition of proteinaceous emulsifier.

The powdered whipping agent preferably comprises 1.5 - 4.5, more preferably 2.0 - 4.0 wt. % proteinaceous emulsifier.

In the powdered whipping agent at least 50 wt. % of the proteinaceous emulsifier is a milk protein or a plant protein or combinations thereof.

Suitable milk proteins preferably comprise milk powder, skim milk powder, casein, casein salts such as sodium, potassium, and/or calcium caseinate, whey protein, whey protein concentrate, and mixtures thereof. More preferably, the milk protein comprises caseinate, most preferably sodium caseinate.

Suitable plant proteins preferably comprise soy protein, pea protein, faba protein, oat protein, wheat protein, and potato protein, their hydrolysates, and mixtures thereof.

Preferably more than 50 wt. %, more preferably more than 75 wt. %, even more preferably more than 90 wt.% of the of the proteinaceous emulsifier in the whipping agent is a milk protein. Most preferably, all the proteinaceous emulsifier is milk protein.

The whipping agent preferably comprises 19 - 33, more preferably 20 - 31 wt. % carbohydrates.

Carbohydrates used in the whipping agent according to the invention preferably comprise hydrolyzed starches, glucose syrup, maltodextrins, lactose and mixtures thereof.

In a preferred embodiment, the carbohydrates comprise glycose syrup.

In another preferred embodiment, the carbohydrates comprise a mixture of glucose syrup and lactose.

Preferably, the carbohydrates in the whipping agent comprise lactose. Addition of lactose appeared to support the sensory profile in terms of dairy taste of the whipped product.

More preferably, 30 - 70 wt. % of the carbohydrates comprise lactose, most preferably 31 - 60 wt.%

In a preferred embodiment, the carbohydrates in the whipping agent comprise a mixture of glucose syrup and lactose, wherein 30 - 70 wt. %, more preferably 31 - 60 wt. % of the total weight of glucose syrup and lactose, is lactose.

In a second aspect, the invention relates to a method for preparing a powdered whipping agent according to the invention, comprising the steps of:

a. Preparing a mixture of water and the fat or oil, the alpha-tending emulsifier, the nonionic mono and/or diglyceride of fatty acids having an acyl chain of 14 - 20 carbon atoms; the proteinaceous emulsifier, the carbohydrates, and optionally other components; and wherein the weight/weight ratio of the fat or oil to the alpha-tending emulsifier is 10 or higher and lower than 30;
b. Homogenizing the mixture to obtain an emulsion;
c. Spray drying the emulsion to obtain a powder.

Thus, preferably, in step (a) the amount of the components fat or oil, the alpha-tending emulsifier, the nonionic mono and/or diglyceride of fatty acids having an acyl chain of 14 - 20 carbon atoms; the proteinaceous emulsifier, and the carbohydrates are chosen such that one arrives at the composition according to claim 1.

Preferably, the mixture in step a. comprises 57 - 73 wt. % fat or oil; 1 - 6.7 wt.% an alpha-tending emulsifier, selected from the group consisting of lactic acid esters of mono and/or diglycerides of fatty acids, acetic acid esters of mono and/or diglycerides of fatty acids, propyleneglycol monostearate, and mixtures thereof; 0.2 - 2.1 wt. % of nonionic mono- and/or diglycerides of fatty acids having an acyl chain of 14 - 20 carbon atoms; 1.0 - 5.2 wt. % proteinaceous emulsifier; and 18 - 36.5 wt % carbohydrates, based on dry weight of the components in the mixture.

Preferably, step a. is carried out a temperature of between 65° C - 75° C.

The emulsifying step is preferably a high pressure homogenization, more preferably a two-step high pressure homogenization. The homogenization pressure preferably comprises a range of 80 - 200 bar, more preferably 100 - 150 bar for the first homogenization step. The second homogenization step preferably comprises a range of 20 - 60 bar, more preferably 25 - 55 bar.

The spray-drying step is carried out according to industrial practice known in the art.

It is preferred that in step a, the carbohydrates comprise a source of lactose. It is further preferred that the source of lactose comprises 60 - 100 wt. %, more preferably 65 - 95 wt.%, most preferably 70 - 90 wt.% of lactose by weight of the source of lactose.

In a preferred embodiment, the source of lactose comprises or is whey permeate, more preferably sweet whey permeate. It is preferred that the whey permeate is in powder-form.

Whey permeate, as the skilled person is aware, is a by-stream from ultrafiltration of whey, a process in which whey proteins are separated from whey, resulting in a whey protein-enriched stream, and a lactose-rich stream. As stated hereinbefore, addition of lactose supports the sensory profile in terms of dairy taste of the whipped product.

In a third aspect, the invention relates to a method for preparing a whipped food product having an overrun of 100-300 % comprising whipping the composition according to the invention in a food acceptable liquid.

The food acceptable liquid may comprise milk or water, or mixtures thereof.

The food acceptable liquid may further comprise, sweeteners, such a sucrose and/or dextrose, thickeners such as locust bean gum, gelatin, gellan gum, xanthan gum, guar gum, gum Arabic, starch, modified starch, gum karaya, gum tragacanth, cellulose gum, carrageenan, agar, alginate, pectin, carboxymethylcellulose, hydroxymethylcellulose and mixtures thereof, flavors, coloring agents etc.

Preferably, the whipping is done at a temperature between 0 - 15 °C.

The whipped food product can suitably be, or used in, for instance, a cake or pie filling, dessert, mousse, crème Chantilly, or ice-cream.

The whipped food product preferably comprises at least 8 wt. %, more preferably at least 15 wt. %, most preferably 20 - 35 wt. % of the whipping agent according to the invention, based on the weight of the whipped food product.

In a fourth aspect, the invention relates to the use of the powdered whipping agent according to the invention for the preparation of a whipped food product, in particular a dessert, cake or pie filling or decoration, ice cream filling, crème Chantilly, or mousse.

The invention will now be illustrated by the following non-limiting examples.

## DESCRIPTION OF FIGURES

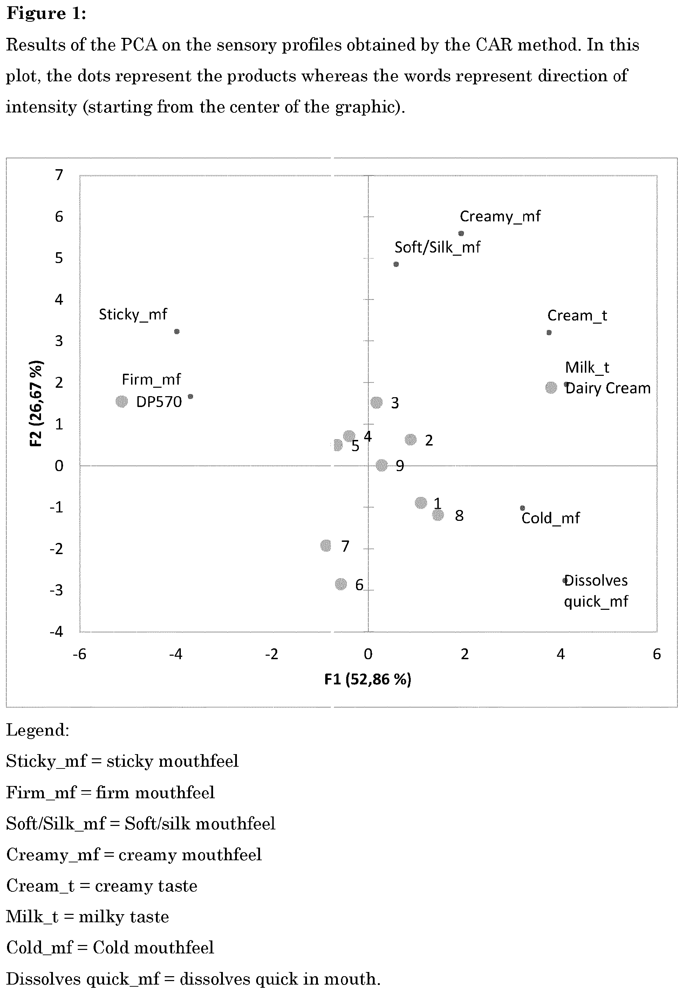

Figure 1: Results of the PCA on the sensory profiles obtained by the CAR method. In this plot, the dots represent the products whereas the words represent direction of intensity (starting from the center of the graphic).

Legend:

Sticky_mf = sticky mouthfeel
Firm_mf = firm mouthfeel
Soft/Silk_mf = Soft/silk mouthfeel
Creamy_mf = creamy mouthfeel
Cream_t = creamy taste
Milk_t = milky taste
Cold_mf = Cold mouthfeel
Dissolves quick_mf = dissolves quick in mouth.

## Examples

Example 1

Preparation of a whipping agent according to the invention.

First, an aqueous mixture at 70 °C was prepared by mixing 41.2 kg of water, 22.3 kg of glucose syrup DE28 (Roquette), 2.6 kg of sodium caseinate (EM 7, FrieslandCampina Ingredients), and 0.8 kg of dipotassium phosphate.

Then, 18.6 kg of the fractionated palm kernel oil (PKO, Cargill), 27.3 kg of fully refined coconut oil (CNO, (Cargill), 4.0 kg of Anhydrous Milk Fat (AMF, FrieslandCampina Butter), 2.4 kg of alpha tending emulsifier (Lactem P22 SG, DuPont), and 0.8 kg of unsaturated, non-ionic mono/diglyceride (GMO [glycerol mono-oleate], Myverol 18-35 PL SG, Kerry) were mixed and added to the aqueous phase and stirred. Subsequently, the aqueous/oily phase was homogenized in a two-step homogenization using a pressure of 100/50 Bar to form an emulsion and was pasteurized at a temperature of 78 °C. After homogenization, the emulsion was spray-dried at approximately (T(in) 150°C and T(out) 85°C.

The whipping agent had the following wt. % composition (table 1):

**Table 1: Composition of whipping agent nr. 1.**

| | |
|---|---|
| Vegetable fat (PKO/CNO/AMF, wt./wt./wt. ratio of 37/55/8) | 63 |
| Carbohydrates (glucose syrup) | 27.3 |
| Alpha-tending emulsifier (Lactem) | 3 |
| Nonionic unsaturated mono/diglyceride (GMO) | 1 |
| Phosphate | 1 |
| Sodium caseinate | 3,2 |
| Moisture | 1,5 |
| Wt./wt. ratio [fat] : [ alpha-tending emulsifier] 21.0:1. | |

Examples 2 -7 and 9: Preparation of further whipping agents according to the invention. Example 8 is a comparative example.

Additional whipping agents according to the invention were prepared, along with several comparative examples. The samples were made in a similar way as in example 1, except for Monte DP 570, a commercial whipping agent, which is readily available from FrieslandCampina Professional. This sample DP 570 is a reference sample against which the invention is tested. The product from EP 3 639 672 A1 was evaluated as well.

The other reference product against which was tested, was whipped dairy cream. This was obtained by whipping DEBIC 32% fat cream (FrieslandCampina Professional) together with 10 wt. % sugar: 460 grams of liquid cream was whipped for 7 minutes with 40 grams icing sucrose at 6 °C in a Hobart mixer, set at level 2 speed, followed by level 3 speed (about 30 seconds) until the cream had reached the desired structure, and an overrun of about 80 % was obtained.

Overrun and firmness were determined according to the same method as for the whipping agents.

Table 2: Composition of samples 2 - 9 (in wt. %).

In examples 3 -9, the fat had the same wt./wt./wt. ratio as in example 1.

The coconut type fat used in example 3 was hydrogenated coconut fat (Cargill). In example 2, the wt./wt. ratio of the fats used was PKO/CNO = 1: 1.5

**Table 2.**

| Sample nr. | 2 | 3 | 4 | 5 | 6 | 7 | Comp. Ex. 8 | 9 |
|---|---|---|---|---|---|---|---|---|
| Fat (PKO + CNO + AMF) | | | 58 | 60 | 66 | 69 | 63 | 63 |
| Fat (PKO + CNO) | 63 | | | | | | | |
| Fat (PKO + hydrogenated CNO + AMF) | | 63 | | | | | | |
| Glucose syrup | 9.1 | 27.3 | 32.5 | 30.3 | 20.8 | 19.3 | 28.3 | 27.3 |
| Lactose + sweet whey permeate (wt./wt. ratio 1:1) | 18.2 | | | | | | | |
| Alpha-tending emulsifier (Lactem) | 3 | 3 | 2.8 | 3 | 6.5 | 5 | 3 | 3 |
| Unsaturated Nonionic mono/diglyceride (GMO) | 1 | 1 | 1 | 1 | 1 | 1 | | |
| Saturated Nonionic mono/diglyceride (GMS; Myvatex 8-40K, Kerry) | | | | | | | | 1 |
| Phosphate | 1 | 1 | 1 | 1 | 1 | 1 | 1 | 1 |
| Sodium caseinate | 3.2 | 3.2 | 3.2 | 3.2 | 3.2 | 3.2 | 3.2 | 3.2 |
| Moisture | 1.5 | 1.5 | 1.5 | 1.5 | 1.5 | 1.5 | 1.5 | 1.5 |
| | | | | | | | | |
| Wt. Ratio [fat] : [alpha-tending emulsifier] | 21.0 | 21.0 | 20.7 | 20.0 | 10.2 | 13.8 | 21.0 | 21.0 |

(continued)

| Sample nr. | 2 | 3 | 4 | 5 | 6 | 7 | Comp. Ex. 8 | 9 |
|---|---|---|---|---|---|---|---|---|
| Wt. Ratio [fat] : [total emulsifier] (*) | 15.8 | 15.8 | 15.3 | 15.0 | 8.8 | 11.5 | 21.0 | 15.8 |

(*) total emulsifier = alpha-tending emulsifier + mono/diglyceride taken together.
(**) sweet whey permeate contains about 85% lactose, based on dry solids (Modern approaches to lactose production, Durham R.J. , in Dairy-Derived Ingredients, pp 103-144, 2009).

Therefore, in example 2, the total amount of carbohydrate (lactose) is 26 % by wt., based on the weight of the whipping agent.

**Table 3A: Composition of reference sample Monte DP 570 (wt. %):**

| | Reference topping (Monte DP 570) |
|---|---|
| Vegetable fat (PKO, hydrogenated and fractionated) | 35.1 |
| Carbohydrates (glucose syrup) | 40.8 |
| Emulsifiers (Acetem (E 472a) and mono- and diglycerides (E471) | 18.8 |
| Sodium caseinate | 2.8 |
| Phosphate | 1 |
| Moisture | 1.5 |
| | |
| Wt. ratio [fat] : [alpha-tending emulsifier] | < 5 |

**Table 3B: prior art composition from EP 3 639 672 A1.**

| In table 3 of EP 3 639 672 , comparative experiment 2 has the following composition: | |
|---|---|
| Ingredient | Wt. % |
| Non-HVO palm kernel oil | 35 |
| Carbohydrates-glucose syrup | 41 |
| Na-Caseinate | 6 |
| Alpha-tending emulsifier (*) | 18 |
| Wt./wt. Ratio [fat]/[alpha-tending emulsifier] | 1.9 |
| (*) The emulsifier is a lactic acid ester of mono/diglycerides of fatty acids based on palm oil (LACTEM). | |

All working examples in EP 3 639 672 show a fat or oil to alpha-tending emulsifier weight ratio of lower than 10.

Functionality testing.

The above mentioned whipping agents were used for the preparation of whipped products, and were tested for whippability (overrun) and foam firmness as follows: In a mixer (KitchenAid), 150 g of the above-mentioned whipping agents were blended with 40 g of icing sugar and 350 ml water of 5-7°C. Mixing continued for three minutes at the maximum speed (level 10).

After whipping, the overrun and firmness were determined.

Overrun is determined as follows:
The foam obtained was brought into an overrun cup, with a pre-defined volume and weight. The % overrun was calculated by means of the following formula:

$$d \ / \ (b-a) \ x \ 100 - 100 = \% \ overrun$$

wherein:

a = weight of empty cup

b =weight of cup filled with whipped product

d = cup volume.

For determining the foam firmness (force required to penetrate the foam), use was made of a texture analyzer TA-XT2i of Stable Micro Systems using a 16.7 gram weight with the following settings: speed 1 mm/s, time 15 seconds, measured value: force (in grams) after 10 seconds penetration. The measurement was done in a cup filled with foam and measured within 5 minutes after the product had been whipped. A second firmness measurement was done after 2 hrs. storage in the refrigerator.

Results of the measurements:

**Table 4. Overrun and firmness of the whipped products.**

| Sample | Overrun (%) | Firmness (gram) | Firmness after 2h at 4°C (gram) |
|---|---|---|---|
| 1 | 175 | 166.8 | 297.4 |
| 2 | 190 | 208.6 | 357.2 |
| 3 | 165 | 270.8 | 488.2 |
| 4 | 147 | 202.3 | 388.8 |
| 5 | 135 | 204.8 | 452.8 |
| 6 | 189 | 225.9 | 323.8 |
| 7 | 146 | 208.5 | 342.3 |
| Comp.8 | 210 | 75.1 | 99.1 |
| 9 | 256 | 112.6 | 159.2 |
| Comparative DP570 Table 3A | 309 | 288.2 | 355.6 |
| Comparative Sample Table 3B | 445 | 88 | n.d. |
| Dairy cream | 84 | 205.2 | 193.7 |

From the overrun and stability test it can be concluded that a good overrun and stability is obtained for the samples according to the present invention. The skilled person will judge an overrun of more than 100% in combination with a firmness of > 100 g directly after whipping, and a firmness of > 150g after 2 hrs. at 4°C to be very satisfactory. Comparative example DP570 has a good overrun and firmness, however, as stated before, it has a sticky mouthfeel. Comparative example from table 3B has no good firmness, and moreover has a sticky mouthfeel. Comparative example 8 has improved taste and good overrun, however, the foam firmness is unacceptably low.

Sensory test.

Although whipping agents can be characterized by their physical and/or chemical parameters, the sensory aspect is even more important. Sensory attributes of food products however can only be assessed by human beings since machine testing is, even if it would be available, highly inadequate to distinguish between subtle nuances in food products.

Trained sensory panelist are able to distinguish between sensory aspects, and such a panel is used here to evaluate the tested whipped products.

14 Trained panelists were enrolled in the sensory test.

The sensory test was carried out using the "CAR" - methodology (Comparison Against a Reference), which is a sensory methodology in which assessors score samples in comparison to a reference sample. It is carried out as follows:

After being familiarized with the reference itself, each assessor receives each sample in a monadic sequence together with the reference samples, and are asked to score the sample on a pre-defined list of attributes using an uneven category scale (usually a 7-point scale, as depicted below) by stating whether the sample is less intense (lower part of the scale), equal (middle of the scale), or more intense (higher part of the scale) than the reference.

| Way less than the ref | Less than the ref | A little less than the ref | Equal to the ref | A little more than the ref | More than the ref | Way more than the ref |
|---|---|---|---|---|---|---|
| ◯ | ◯ | ◯ | ◯ | ◯ | ◯ | ◯ |

Description of the 7-point scale used in the CAR methodology.

On this scale, the assessors are trained to use consistently the scale as following:

- Equal to the reference means no difference between reference and the test sample on that specific attribute;
- A little more/less than the reference: assessors have noted a hint of a difference between the reference and the test sample, but this difference is still hard to detect on that specific attribute;
- More/Less than the reference: assessors have consistently noted a difference on that specific attribute, also after re-tasting/smelling.
- Way more/Less than the reference: very clear difference, easy to detect on that specific attribute

In practice, a hidden/blind reference is added to the test to check for the quality of the assessors' responses. Additionally, one of the sample could also be duplicated to ensure that it receives very similar scores.

The application of the CAR methodology is two-fold: Mainly, when the interest is in comparing samples to the reference (e.g. recipe change, shelf-life studies, etc.), it provides a direct quantitative measurement of the samples against the reference. However, such methodology can also be used to compare the samples between each other. In such case, the reference sample is used as an anchor to ensure that the scale is used consistently, especially if the test is done over multiple sessions/days. In the literature, methodologies that relate to CAR include the difference from control test and the A/Not A with level of sureness (Meilgaard, M. C., Civille, G. V., and Carr, B. T. (2007). Sensory Evaluation Techniques (4th ed.), CRC Press). Thus, a CAR test was performed and results were discussed, and 8 attributes were selected as key attributes.

For each product, the average score provided across all assessors during the CAR test was computed for each of the 8 key attributes. Such table (rows x attributes) - also known as "product profile" - was submitted to Principal Component Analysis (PCA) in order to visualize graphically the relationship between samples and attributes.

The central ideal of PCA is to reduce the dimensionality of a data set (here the product profiles) consisting of a large number of interrelated variables (here sensory attributes), while retaining as much as possible of the variation present in the data set. This is achieved by transforming to a new set of variables (called the Principal Components or PCs) which are uncorrelated, and which are ordered so that the first few retain most of the variation present in all of the original variables. See Jolliffe, I. T. (2002). Principal Component Analysis, Springer (ISBN 978-0-387-22440-4)

The results of the PCA performed on the table of sensory profiles is shown in Figure 1.

In this Figure, the dots represent the products, and the words represent the sensory attributes in such a way that:

- Two products are close together if they have similar sensory profiles, and are distant if their profiles differ.
- The cosinus of the angle (starting from the centre of the graphic) between two attributes reflects the correlation between the two attributes:

  o two attributes situated next to each other (e.g. Cream_t and Milk_t) have a correlation close to 1, meaning that products with strong cream taste also have a strong milk taste;
  o two attributes situated in opposite direction (e.g. Dissolves quick_mf and Firm_mf) have a correlation close to -1 meaning that products which dissolve quicker (mf) are less firm (mf);
  o two attributes that are orthogonal (e.g. Sticky_mf and Soft/Silk_mf) have a correlation close to 0 meaning that the stickiness (mf) does not affect the perception of soft/silk (mf).

Figure 1 shows that the first PC (horizontal line) represents by itself approx. 53% of the total information present in the sensory profile table and opposes product DP570 (described as intense in Sticky_mf and Firm_mf) to product Dairy Cream (described as (Cream_t, Milk_t, Cold_mf, and Dissolves quick_mf). The second PC represents approx. 27% of the total information, and is particularly due to sample 6 and 7 which are described as low in Creamy_mf and Soft/Silk_mf compared to the rest.

The results show clearly the effect of the invention: the compositions of the invention have their selected attributes closer to those of whipped dairy cream than reference topping DP 570.

Summarizing the physical and sensory test results, it can be concluded that only the whipping agents according to the invention fulfill the requirements as stated in the background. Such products have a sensory profile much closer to whipped cream, have a good overrun and good foam firmness directly after whipping and after cold storage for several hours. Conventional whipping agents like DP 570 or products described in the prior art always have a sticky mouthfeel and sometimes a too low firmness. The comparative composition example 8 has an improved mouthfeel, but has an unacceptable foam firmness.

**Claims**

1.  A powdered whipping agent suitable for preparing a whipped topping, the whipping agent comprising, by weight of the whipping agent:

    a. 57 - 70 wt. % fat or oil;
    b. 1 - 6.5 wt.% of an alpha-tending emulsifier, selected from the group consisting of lactic acid esters of mono and/or diglycerides of fatty acids, acetic acid esters of mono and/or diglycerides of fatty acids, propyleneglycol monostearate, and mixtures thereof;
    c. 0.2 - 2.0 wt. % of nonionic mono- and/or diglycerides of fatty acids having an acyl chain of 14 - 20 carbon atoms;
    d. 1.0 - 5 wt. % proteinaceous emulsifier
    e. 18 - 35 wt. % carbohydrates
    f. 0.1 - 4 wt.% moisture;

    and wherein the weight/weight ratio of the fat or oil to the alpha-tending emulsifier is 10 or higher and lower than 30.

2.  The powdered whipping agent according to claim 1, wherein the nonionic mono- and/or diglycerides of fatty acids having an acyl chain of 14 - 20 carbon atoms comprise an unsaturated acyl chain.

3.  The powdered whipping agent according to claim 1, wherein the nonionic mono- and/or diglycerides of fatty acids having an acyl chain of 14 - 20 carbon atoms comprise a saturated acyl chain.

4.  The powdered whipping agent according to any one of claims 1 - 3, wherein more than 80 wt. % of the fat or oil comprises vegetable oil or fat, or mixtures thereof.

5.  The powdered whipping agent according to claim 4, wherein the vegetable oil or fat is selected from the group consisting of palm oil, palm kernel oil, coconut oil, palm kernel stearin, sunflower oil, rapeseed oil, soybean oil, corn oil, shea oil, and/or mixtures thereof.

6.  The powdered whipping agent according to any one of the claims 1 - 4, wherein the fat or oil comprises less than 20 wt. % of milk fat and/or butter oil, based on the total weight of the fat or oil.

7.  The powdered whipping agent according to any one of the claims 1 - 6, wherein the weight/weight ratio of the fat or oil to the nonionic mono- and/or diglycerides of fatty acids having an acyl chain of 14 - 20 carbon atoms is higher than 29.

8.  The powdered whipping agent according to any one of the claims 1 - 7, further comprising 0.1 - 1.5 wt.% of additional components selected from the group of stabilizers, hydrocolloids, flavoring agents and coloring agents, and combinations thereof.

9.  The powdered whipping agent according to any one of the claims 1 - 8, wherein at least 50 wt. % of the proteinaceous emulsifier is a milk protein or a plant protein or combinations thereof.

10. The powdered whipping agent according to any one of the claims 1 - 9, wherein the carbohydrates comprise lactose.

11. Method for preparing a powdered whipping agents according to any one of the claims 1 -10, comprising the steps of:

    a. Preparing a mixture of water and the fat or oil, the alpha-tending emulsifier, the nonionic mono and/or diglyceride of fatty acids having an acyl chain of 14 - 20 carbon atoms; the proteinaceous emulsifier, the carbohydrates, and optionally other components, and wherein the weight/weight ratio of the fat or oil to the alpha-tending emulsifier is 10 or higher and lower than 30;
    b. Homogenizing the mixture to obtain an emulsion; and
    c. Spray drying the emulsion to obtain a powder.

12. Method according to claim 11, wherein the carbohydrates comprise a source of lactose.

13. Method according to claim 12, wherein the source of lactose comprises 60 - 100 wt.% lactose by weight of the source of lactose.

14. Method for preparing a whipped food product having an overrun of 100-300 % comprising whipping the composition of any one of claim 1 - 10 in a food acceptable liquid.

15. Use of the powdered whipping agent according to any one of the claims 1 - 10 for the preparation of a whipped food product, in particular a dessert, cake or pie filling or decoration, ice cream filling, crème Chantilly, or mousse.

**Patentansprüche**

1. Pulverförmiges Aufschlagmittel, das zum Herstellen eines aufgeschlagenen Toppings geeignet ist, wobei das Aufschlagmittel, bezogen auf das Gewicht des Aufschlagmittels, Folgendes umfasst:

   a. zu 57 - 70 Gew.-% Fett oder Öl;
   b. zu 1 - 6,5 Gew.-% einen Emulgator mit alpha-Neigung, der ausgewählt ist aus der Gruppe von Milchsäureestern von Mono- und/oder Diglyceriden von Fettsäuren, Essigsäureestern von Mono- und/oder Diglyceriden von Fettsäuren, Propylenglycolmonostearat und Gemischen davon;
   c. zu 0,2 - 2,0 Gew.-% nichtionische Mono- und/oder Diglyceride von Fettsäuren mit einer Acylkette aus 14 - 20 Kohlenstoffatomen;
   d. zu 1,0 - 5 Gew.-% proteinischen Emulgator
   e. zu 18 - 35 Gew.-% Kohlenhydrate
   f. zu 0,1 - 4 Gew.-% Feuchtigkeit;

   und wobei das Gewichtsverhältnis des Fetts oder Öls zu dem Emulgator mit alpha-Neigung bei 10 oder höher und niedriger als 30 liegt.

2. Pulverförmiges Aufschlagmittel nach Anspruch 1, wobei die nichtionischen Mono- und/oder Diglyceride von Fettsäuren mit einer Acylkette aus 14 - 20 Kohlenstoffatomen eine ungesättigte Acylkette umfassen.

3. Pulverförmiges Aufschlagmittel nach Anspruch 1, wobei die nichtionischen Mono- und/oder Diglyceride von Fettsäuren mit einer Acylkette aus 14 - 20 Kohlenstoffatomen eine gesättigte Acylkette umfassen.

4. Pulverförmiges Aufschlagmittel nach einem der Ansprüche 1 - 3, wobei mehr als 80 Gew.-% des Fetts oder Öls pflanzliches Öl oder Fett oder Gemische davon umfassen.

5. Pulverförmiges Aufschlagmittel nach Anspruch 4, wobei das pflanzliche Öl oder Fett ausgewählt ist aus der Gruppe von Palmöl, Palmkernöl, Kokosöl, Palmkernstearin, Sonnenblumenöl, Rapsöl, Sojaöl, Maisöl, Sheaöl und/oder Gemischen davon.

6. Pulverförmiges Aufschlagmittel nach einem der Ansprüche 1 - 4, wobei das Fett oder Öl zu weniger als 20 Gew.-% Milchfett und/oder Butteröl, bezogen auf das Gesamtgewicht des Fetts oder Öls, umfasst.

7. Pulverförmiges Aufschlagmittel nach einem der Ansprüche 1 - 6, wobei das Gewichtsverhältnis des Fetts oder Öls zu den nichtionischen Mono- und/oder Diglyceriden von Fettsäuren mit einer Acylkette aus 14 - 20 Kohlenstoffatomen höher als 29 ist.

8. Pulverförmiges Aufschlagmittel nach einem der Ansprüche 1 - 7, ferner umfassend zu 0,1 - 1,5 Gew.-% zusätzliche Komponenten, die ausgewählt sind aus der Gruppe von Stabilisatoren, Hydrokolloiden, Aromastoffen und Färbemitteln und Kombinationen davon.

9. Pulverförmiges Aufschlagmittel nach einem der Ansprüche 1 - 8, wobei es sich bei mindestens 50 Gew.-% des proteinischen Emulgators um ein Milchprotein oder ein Pflanzenprotein oder Kombinationen davon handelt.

10. Pulverförmiges Aufschlagmittel nach einem der Ansprüche 1 - 9, wobei die Kohlenhydrate Lactose umfassen.

**11.** Verfahren zum Herstellen eines pulverförmigen Aufschlagmittels nach einem der Ansprüche 1 - 10, umfassend die folgenden Schritte:

a. Herstellen eines Gemischs aus Wasser und dem Fett oder Öl, dem Emulgator mit alpha-Neigung, dem nichtionischen Mono- und/oder Diglycerid von Fettsäuren mit einer Acylkette aus 14 - 20 Kohlenstoffatomen; dem proteinischen Emulgator, den Kohlenhydraten und gegebenenfalls anderen Komponenten, und wobei das Gewichtsverhältnis des Fetts oder Öls zu dem Emulgator mit alpha-Neigung bei 10 oder höher und niedriger als 30 liegt;
b. Homogenisieren des Gemischs unter Erhalt einer Emulsion; und
c. Sprühtrocknen der Emulsion unter Erhalt eines Pulvers.

**12.** Verfahren nach Anspruch 11, wobei die Kohlenhydrate eine Lactosequelle umfassen.

**13.** Verfahren nach Anspruch 12, wobei die Lactosequelle zu 60 - 100 Gew.-% Lactose, bezogen auf das Gewicht der Lactosequelle, umfasst.

**14.** Verfahren zum Herstellen eines aufgeschlagenen Lebensmittelprodukts mit einem Luftaufschlag von 100 - 300 %, umfassend das Aufschlagen der Zusammensetzung nach einem der Ansprüche 1 - 10 in einer lebensmittelverträglichen Flüssigkeit.

**15.** Verwendung des pulverförmigen Aufschlagmittels nach einem der Ansprüche 1 - 10 zur Herstellung eines aufgeschlagenen Lebensmittelprodukts, insbesondere eines Desserts, einer Torten- oder Kuchenfüllung oder - dekoration, Speiseeisfüllung, Crème Chantilly oder Mousse.

## Revendications

**1.** Agent de fouettage en poudre approprié pour préparer un nappage fouetté, l'agent de fouettage comprenant, en poids de l'agent de fouettage :

a. 57 à 70 % en poids de graisse ou d'huile ;
b. 1 à 6,5 % en poids d'un émulsifiant alpha-tenseur, choisi dans le groupe constitué des esters d'acide lactique de mono- et/ou diglycérides d'acides gras, des esters d'acide acétique de mono- et/ou diglycérides d'acides gras, du monostéarate de propylèneglycol et de leurs mélanges ;
c. 0,2 à 2,0 % en poids de mono- et/ou diglycérides non ioniques d'acides gras ayant une chaîne acyle de 14 à 20 atomes de carbone ;
d. 1,0 à 5 % en poids d'émulsifiant protéique
e. 18 à 35 % en poids de glucides
f. 0,1 à 4 % en poids d'humidité ;

et dans lequel le rapport poids/poids de la graisse ou de l'huile sur l'émulsifiant alpha-tenseur est de 10 ou plus et inférieur à 30.

**2.** Agent de fouettage en poudre selon la revendication 1, dans lequel les mono- et/ou diglycérides non ioniques d'acides gras ayant une chaîne acyle de 14 à 20 atomes de carbone comprennent une chaîne acyle insaturée.

**3.** Agent de fouettage en poudre selon la revendication 1, dans lequel les mono- et/ou diglycérides non ioniques d'acides gras ayant une chaîne acyle de 14 à 20 atomes de carbone comprennent une chaîne acyle saturée.

**4.** Agent de fouettage en poudre selon l'une quelconque des revendications 1 à 3, dans lequel plus de 80 % en poids de la graisse ou de l'huile comprend de l'huile ou de la graisse végétale ou leurs mélanges.

**5.** Agent de fouettage en poudre selon la revendication 4, dans lequel l'huile ou la graisse végétale est choisie dans le groupe constitué de l'huile de palme, l'huile de palmiste, l'huile de noix de coco, la stéarine de palmiste, l'huile de tournesol, l'huile de colza, l'huile de soja, l'huile de maïs, l'huile de karité et/ou leurs mélanges.

**6.** Agent de fouettage en poudre selon l'une quelconque des revendications 1 à 4, dans lequel la graisse ou l'huile comprend moins de 20 % en poids de graisse de lait et/ou d'huile de beurre, par rapport au poids total de la graisse ou de l'huile.

7. Agent de fouettage en poudre selon l'une quelconque des revendications 1 à 6, dans lequel le rapport poids/poids de la graisse ou de l'huile sur les mono-et/ou diglycérides non ioniques d'acides gras ayant une chaîne acyle de 14 à 20 atomes de carbone est supérieur à 29.

8. Agent de fouettage en poudre selon l'une quelconque des revendications 1 à 7, comprenant en outre 0,1 à 1,5 % en poids de composants supplémentaires choisis dans le groupe des stabilisants, des hydrocolloïdes, des agents aromatisants et des agents colorants et de leurs combinaisons.

9. Agent de fouettage en poudre selon l'une quelconque des revendications 1 à 8, dans lequel au moins 50 % en poids de l'émulsifiant protéique est une protéine de lait ou une protéine végétale ou leurs combinaisons.

10. Agent de fouettage en poudre selon l'une quelconque des revendications 1 à 9, dans lequel les glucides comprennent du lactose.

11. Procédé pour la préparation d'agents de fouettage en poudre selon l'une quelconque des revendications 1 à 10, comprenant les étapes de :

   a. Préparation d'un mélange d'eau et de la graisse ou de l'huile, de l'émulsifiant alpha-tenseur, du mono et/ou diglycéride non ionique d'acides gras ayant une chaîne acyle de 14 à 20 atomes de carbone ; de l'émulsifiant protéique, des glucides et éventuellement d'autres composants, et dans lequel le rapport poids/poids de la graisse ou de l'huile sur l'émulsifiant alpha-tenseur est de 10 ou plus et inférieur à 30 ;
   b. Homogénéisation du mélange pour obtenir une émulsion ; et
   c. Séchage par pulvérisation de l'émulsion pour obtenir une poudre.

12. Procédé selon la revendication 11, dans lequel les glucides comprennent une source de lactose.

13. Procédé selon la revendication 12, dans lequel la source de lactose comprend 60 à 100 % en poids de lactose par rapport au poids de la source de lactose.

14. Procédé pour la préparation d'un produit alimentaire fouetté ayant un foisonnement de 100 à 300 %, comprenant le fouettage de la composition selon l'une quelconque des revendications 1 à 10 dans un liquide acceptable du point de vue alimentaire.

15. Utilisation de l'agent de fouettage en poudre selon l'une quelconque des revendications 1 à 10 pour la préparation d'un produit alimentaire fouetté, en particulier d'un dessert, d'un fourrage ou d'une décoration pour gâteau ou tarte, d'un fourrage pour crème glacée, d'une crème chantilly ou d'une mousse.

**Figure 1:**

Results of the PCA on the sensory profiles obtained by the CAR method. In this plot, the dots represent the products whereas the words represent direction of intensity (starting from the center of the graphic).

Legend:

Sticky_mf = sticky mouthfeel

Firm_mf = firm mouthfeel

Soft/Silk_mf = Soft/silk mouthfeel

Creamy_mf = creamy mouthfeel

Cream_t = creamy taste

Milk_t = milky taste

Cold_mf = Cold mouthfeel

Dissolves quick_mf = dissolves quick in mouth.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3639672 A

- EP 3639672 A1

**Non-patent literature cited in the description**

- **GERARD L. HASENHUETTL**. *Food emulsifiers and their applications*, 2008, 305
- **DURHAM R.J.** Modern approaches to lactose production. *Dairy-Derived Ingredients*, 2009, 103-144

- **MEILGAARD, M. C.** ; **CIVILLE, G. V.** ; **CARR, B. T.** Sensory Evaluation Techniques. CRC Press, 2007
- **JOLLIFFE, I. T.** Principal Component Analysis. Springer, 2002